(19) Europäisches Patentamt / European Patent Office / Office européen des brevets

(11) **EP 4 493 454 B1**

(12) **EUROPEAN PATENT SPECIFICATION**

(45) Date of publication and mention
of the grant of the patent:
**07.05.2025 Bulletin 2025/19**

(21) Application number: **23730965.3**

(22) Date of filing: **31.03.2023**

(51) International Patent Classification (IPC):
**B63B 1/04** *(2006.01)*      **B63B 1/20** *(2006.01)*
**B60V 3/06** *(2006.01)*      **B60V 1/08** *(2006.01)*
**B63B 1/38** *(2006.01)*

(52) Cooperative Patent Classification (CPC):
**B60V 3/065; B60V 1/08; B63B 1/38;**
B63B 2001/201; B63B 2001/203

(86) International application number:
**PCT/NO2023/050075**

(87) International publication number:
**WO 2023/195859 (12.10.2023 Gazette 2023/41)**

(54) **AIR SUPPORTED VESSEL WITH STARBOARD AND PORT KEEL LINES WITH THEIR RESPECTIVE KEEL STEPS TO PREVENT AIR LEAKAGE**

LUFTKISSENFAHRZEUG

NAVIRE SUR COUSSIN D'AIR

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **07.04.2022 NO 20220423**

(43) Date of publication of application:
**22.01.2025 Bulletin 2025/04**

(73) Proprietor: **PASCAL TECHNOLOGIES AS**
**0278 Oslo (NO)**

(72) Inventors:
• **LIVGÅRD, Tor-Kolbjørn**
**3220 Sandefjord (NO)**
• **NORDÅS, Daniel Edward Ashton**
**0473 Oslo (NO)**

(74) Representative: **Acapo AS**
**Edvard Griegs vei 1**
**5059 Bergen (NO)**

(56) References cited:
CN-U- 201 761 628      GB-A- 2 009 677
IT-A1- ME20 100 004      SE-C2- 539 235
US-A- 3 469 557      US-A- 4 587 918
US-A- 5 415 120      US-A1- 2003 159 637
US-A1- 2011 107 954      US-B1- 6 293 216

EP 4 493 454 B1

## Description

### Introduction

The present invention relates to an air supported vessel with a basically V-shaped hull and where there is a discontinuous transition respectively between a starboard and a port keel part's respective keel steps and a V-shaped bow's bow step.

The background of the invention is that air supported vessels are an important part of future shipping as an alternative to achieve the strict emissions requirements that are coming. Air supported hulls have a significantly reduced hydrodynamic resistance compared to conventional comparable hulls. By further developing air supported hulls to reduce air loss from the air supported chamber, increase directional stability and reduce hydrodynamic turning resistance moment(s), it will help bringing air supported vessels to become an even more interesting option within the market for environmentally friendly shipping.

### Background technology

Most of the air supported vessels on the market today are what are also called air cushion boats or "Hovercraft" and many of them can move on land and in water. They often have an inflatable skirt around the hull which is internally filled with air and creates a boundary for the air supported chamber which, with the help of an excess pressure, lifts the vessel, but there are also some designs of air cushion boats with fixed hulls also called Surface Effect Ship (SES) or " Sidewall Hovercraft". Such types of vessels have both an air cushion, like a hovercraft, and a hull like a conventional vessel. When the air cushion is in use, only a small part of the hull protrudes into the sea.

US 3.742.888 patent from 1973 deals with a soft, stable multi-chambered hull, which has a number of high-pressure chambers around the periphery. The hull has further included a valve slot which provides a means for emptying the continuously charged high pressure chamber. The high-pressure chambers under the boat provide soft support with the air cushion and low friction. A disadvantage of such a hull, where there is so little buoyancy in the side walls of the high-pressure chambers, is that the vessel will lose stability as soon as the pressure in the air supported chambers drops or the fans for blowing in high-pressure air are switched off. The buoyancy elements are not in the keel itself, so the hull will also sink deeper into the water as soon as the high-pressure air is turned off. Another disadvantage of such a hull, where there is a deep longitudinal keel on starboard and port all the way from the stern and almost to the bow, is a high hydrodynamic turning resistance moment and great drag due to the length of the keel in the sea. There will also be a disadvantage with air discharge, in that high-pressure air is required and it will also require much more energy to lift the hull out of the water.

In US 3267898 patent from 1966, the air cushion fan is also used as a propulsion fan for the vessel. This will require much energy, both to lift the vessel and also to have enough thrust to propel the vessel forward. This patent is for a vessel that should be able to move both on water and on ice, like a sled by turning some longitudinal skirts 90 degrees, so they are lower than the keels. This invention will require too much energy to effectively move forward economically in relation to fuel consumption and thus indirectly in relation to today's environmental requirements.

US 3476069 patent from 1967 describes an air-cushioned vessel with a planing hull in the aft part and a front part which is delimited in whole or in part by a skirt. The aft part is delimited by two keel sections and the forward part is delimited by the flexible skirt.

GB 2009677, US 6293216, CN 201761628U, US 5415120 disclose other examples of vessels.

The present invention generally aims to solve at least one, but preferably several, of the problems that exist from the prior art.

### Brief summary of the invention

The invention is defined by the independent claim 1.

### Advantages of the invention

An advantage of the invention on an air supported vessel where the lower part of the air supported chamber's starboard and port side walls are arranged with a longitudinal keel step on the starboard and port side respectively, is reduced air leakage from the air supported chamber under the keel step thresholds. The same advantage also applies to the V-shaped bow with the side wall of the air supported chamber bow with the bow step and the bow step threshold, which is reduced air leakage.

Another advantage of the invention on an air supported vessel where the V-shaped bow lies with reduced or very little water influence in operation, is that the V-shaped hull gets a better load distribution aft, which in turn gives a more advantageous ratio between lifting force and resistance on the keel parts of the V-shaped hull, on the starboard and port side, respectively Furthermore, it is an advantage of the invention that the two straight longitudinal keel parts on the starboard and port side, respectively, which extend from the stern to slightly past the rear part of the V-shaped bow and with a greater draft than the V-shaped bow, provides good directional stability on the V-shaped hull, especially when waves slant in from the front or waves slant in from behind.

**Brief description of figures**

Preferred embodiments of the invention will be described in more detail below with reference to the accompanying figures, in which:

Figure 0 shows a profile, also called an elevation, of the air supported vessel according to the present invention, which shows a longitudinal part of a basically V-shaped hull 0.0, seen from the outside towards starboard side.

Figure 1a shows a profile seen from the outside towards the starboard side of an embodiment of the basically V-shaped hull 0.0.

Figure 1b shows a sketch/outline of an embodiment of the basically V-shaped hull 0.0 seen towards the starboard or port side, as the V-shaped hull is symmetrical about a center line CL.

Figure 2a shows a bottom according to an embodiment of the basically V-shaped hull 0.0 and where an embodiment of a recess in the V-shaped hull 0.0 which forms the air supported chamber 5.0 with the air supported chamber ceiling 5.1 is also shown.

Figure 2b shows a sketch/outline of the bottom according to an embodiment of the basically V-shaped hull 0.0.

Figure 3a shows a profile of midship seen aft of an embodiment of the basically V-shaped hull 0.0.

Figure 3b shows a sketch/outline of the midship seen aft of an embodiment of the basically V-shaped hull 0.0.

Figure 4a shows a profile of the midship seen forward on an embodiment of the V-shaped hull 0.0.

Figure 4b shows a sketch/outline of the air supported vessel midship seen forward according to an embodiment of the basically V-shaped hull 0.0.

Figure 5 shows a sketch/outline of a longitudinal part at the starboard, or port, longitudinal keel step boundary 2.3.S/B according to an embodiment of the V-shaped hull 0.0.

Figure 6 shows a sketch/outline of two cross-sections marked A and B, according to figure 5, of an embodiment of the basically V-shaped hull 0.0, and where the sketch is marked with lines and reference numbers in order to name the parts of the V-shaped hull 0.0.

Figure 7 shows an embodiment of frame sections on a discontinuous transition 1.0.B on port side of the basically V-shaped hull 0.0, and where the V-shaped hull 0.0 is symmetrical about the center line CL, so corresponding embodiment of a discontinuous transition 1.0. S will be on the starboard side.

Figure 8a shows an embodiment of frame sections in the discontinuous transition area 1.0.B on port side of the V-shaped hull 0.0, seen obliquely from above the V-shaped bow part 3.0 towards the port keel part 2.1.B. The basically V-shaped hull 0.0 is symmetrical about the centerline, so such a design will also be on starboard side.

Figure 8b shows an embodiment of frame sections in the discontinuous transition area 1.0.B on port side of the basically V-shaped hull 0.0, seen obliquely from above the V-shaped bow section 3.0 towards the port keel part 2.1. B, and where the parts in the port discontinuous transition area 1.0.B is shaded in different designs to distinguish them more clearly from each other The basically V-shaped hull 0.0 is symmetrical about the centerline, so such a design will also be on the starboard side.

Figure 9a shows an embodiment of the frame sections in the discontinuous transition 1.0.B in a plan sketch, seen from the center line CL towards port side.

Figure 9b shows an embodiment of the frame sections in the discontinuous transition 1.0.B in a plan sketch, seen from the center line CL towards port side, and where the parts in the discontinuous transition are shaded to separate them from each other.

Figure 10 shows an embodiment of the frame sections in the discontinuous transition 1.0.B in a plan sketch, viewed from above and downwards on the basically V-shaped hull 0.0 on the port side.

Figure 11 shows an embodiment of the frame sections in the discontinuous transition 1.0.B in a plan sketch, seen from the centerline CL towards port side, and where a port side step secant 8.1.B is marked with a port side secant angle $\alpha B$ which shows an average rise of the port side the step profile 8.0.B. The hull is symmetrical about centerline CL, so a similar design is found on the starboard side.

**Embodiments of the invention**

The present invention bring about an air supported vessel comprising the features as given in claim 1.

In one embodiment of the invention may the starboard keel part 2.1.S comprises a starboard longitudinal keel step 2.2.S and a starboard keel step threshold 2.3.S, which forms a lower starboard lateral delimitation of the air supported chamber's starboard side wall 5.2.S, to reduce air leakage below a starboard keel line KL. S, and the port keel part 2.1.B comprises a port longitudinal keel step 2.2.B and a port keel step threshold 2.3.B, which forms a lower port lateral delimitation of the air supported chamber's port side wall 5.2.B, to reduce air leakage below a port keel line KL. B.

According to one embodiment of the invention, a transition between the starboard longitudinal keel step 2.2.S and the starboard aft part of the bow step 1.4.S may be a starboard discontinuous transition 1.0.S, while being a transition between the port longitudinal keel step 2.2.B and port aft part of the bow step 1.4.B is a port discontinuous transition 1.0.B.

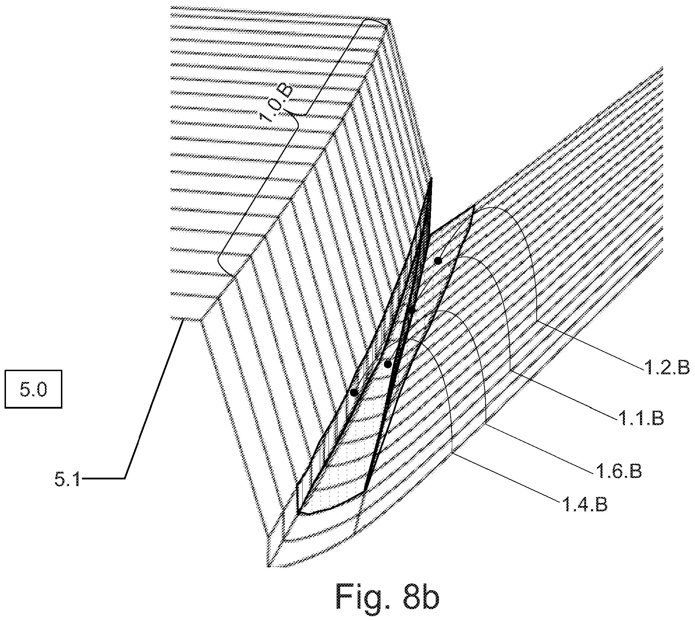

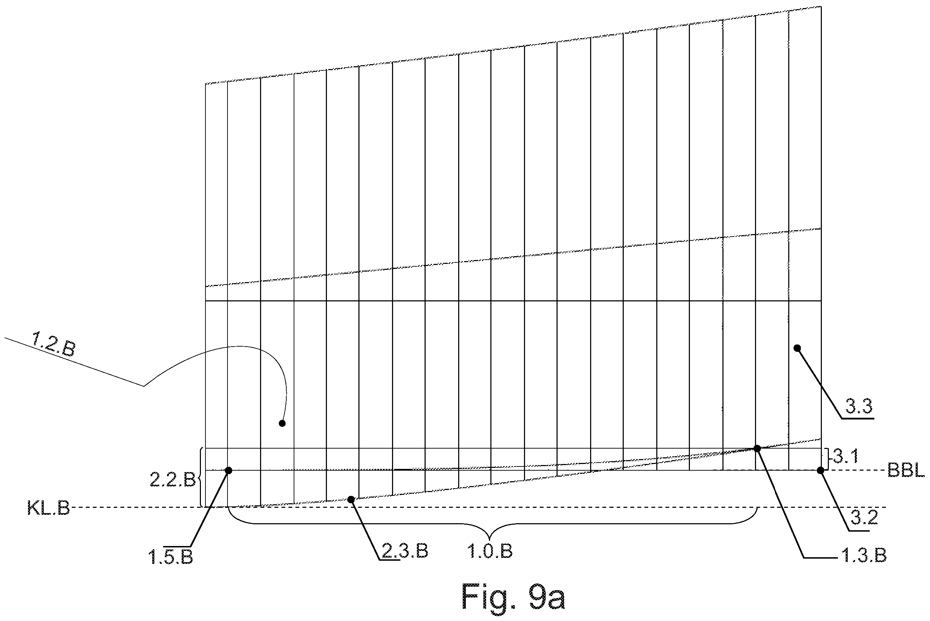

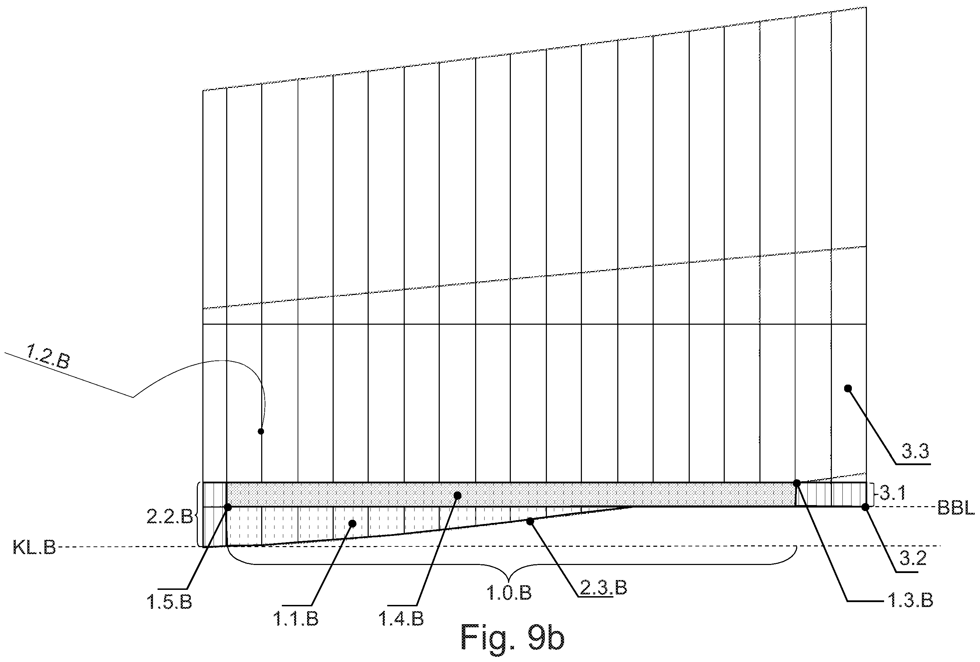

The term "discontinuous transition" is used to describe that the forward part of the relatively sharp keel lines of the keel steps 2.2.S, 2.2.B does not run over into the bow step 3.1, but extends forward and past the aft parts of the bow steps 1.4.S, 1.4.B, see especially Figure 8b, 9a and 9b.

The advantages of having a transverse starboard and port step 4.0.S, 4.0.B, is to make the bow base line BBL to have a reduced draft in relation to the longitudinal keel steps on the starboard and port side 2.2.S, 2.2.B respectively, so that drag and wave resistance are reduced. Another advantage is that the hydrodynamic turning resistance moment is reduced by having a bow baseline BBL that has little draft.

In another embodiment of the invention, the V-shaped bow 3.0 may have a bow base line BBL with a slight fall forward calculated from a transition between the bow step 3.1, respectively the starboard longitudinal keel step 2.2.S or the port longitudinal keel step 2.2.B.

Such a design may help to increase buoyancy in the V-shaped bow 3.0, so that the vessel obtain better stability and may have a more flexible weight distribution on the main deck. Another advantage is that the bow base line BBL will be approximately horizontal when the vessel has an aft trim or when the vessel's bow rises in the sea during thrust, and will thus contribute to reduce the risk of air discharge below the bow threshold 3.2.

According to one embodiment of the invention, the starboard keel part 2.1.S may be parallel to the V-shaped hull's 0.0 centerline CL and where the port keel portion 2.1.B may be parallel to the V-shaped hull's 0.0 centerline CL.

By having two parallel keel parts, on the starboard and port side 2.1.S, 2.1.B respectively, around the V-shaped hull's 0.0 center line CL, the directional stability will be improved compared to the directional stability of a conventional V-hull, and especially against waves coming slanted in from the front or back. Lateral stability will also increase, the GZ curve, compared to a conventional V-hull.

In another embodiment of the invention, the side wall bow 5.4 of the air supported chamber may be completely or partially, outwardly inclined.

In a further embodiment of the invention, the longitudinal keel steps, respectively on the starboard and port side, 2.2.S, 2.2.B and the bow step 3.1 may be substantially vertical steps.

The entirely or partially air supported chamber side walls, respectively on the starboard and port side, 5.2.S, 5.2.B help to give the V-shaped hull 0.0 buoyancy and stability when the vessel is at rest and there is no supply of air to the air supported chamber 5.0 . The vertical longitudinal keel steps, respectively on the starboard and port side, 2.2.S, 2.2.B and the bow step, which sits on the lower edge of the air supported chamber side walls 5.2.S, 5.2.B, 5.4, are an obstacle for air to escape below the threshold on the vertical longitudinal keel steps, respectively on the starboard and port side, 2.2.S, 2.2.B and the threshold on the bow step 3.1.

In an embodiment of the invention, the V-shaped bow 3.0, comprising the bow step 3.1, may extend aft to the aft starboard, and respectively the aft port, transition point 1.5.S, 1.5.B which is located near the middle 0.5 x CWL of a construction water line KVL. By pulling the V-shaped bow section in CWL 3.4 close to the middle of the construction waterline CWL, there is less hydrodynamic turning resistance moment(s).

## Detailed description of figures

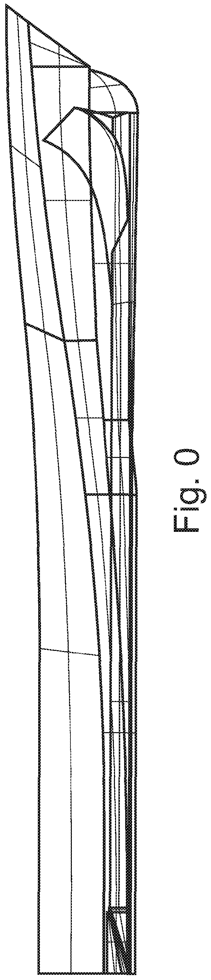

Figures 0-11 show one or more embodiments of a hovercraft according to the present invention.

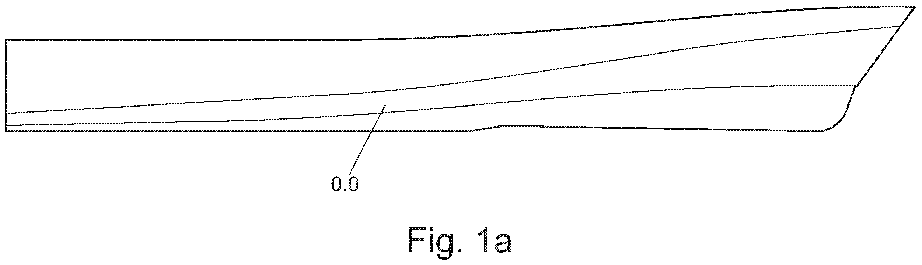

In Figure 0 there is a profile only illustrated, elevation, which shows a longitudinal section of an embodiment of the basically V-shaped hull 0.0, which is the same hull as shown in Figure 1a, where the surfaces are now tinted with a gray color , so that the V-shaped bow 3.0 comes forward, both of these Figures shown are seen from the outside towards the starboard side of the hull.

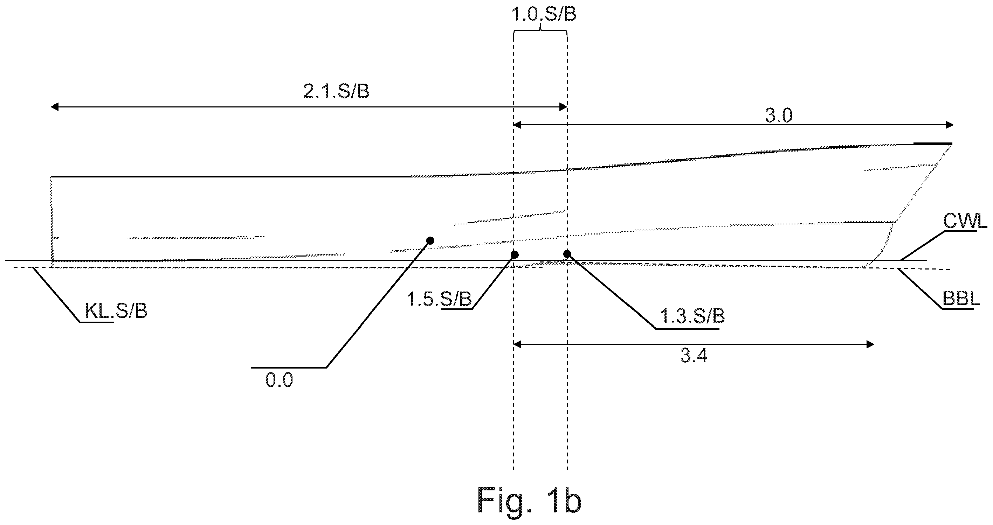

Figure 1b shows an embodiment of the basically V-shaped hull 0.0 with a more general elevation of the longitudinal section, which can either be viewed towards the starboard or port side, as the basically V-shaped hull 0.0 is symmetrical about the centerline CL . Details such as starboard or port, the keel part 2.1.S, 2.1.B, the V-shaped bow 3.0, the bow base line BBL, starboard or port, the keel line KL.S, KL.B, starboard or port, are marked on the figure. discontinuous transition 1.0.S, 1.0.B, the construction waterline KVL, the aft starboard, or port, transition point 1.5.S, 1.5.B, the forward starboard or port point 1.3.S, 1.3.B and the V-shaped bow section in KVL 3.4, to illustrate where they are located on the basically V-shaped hull 0.0.

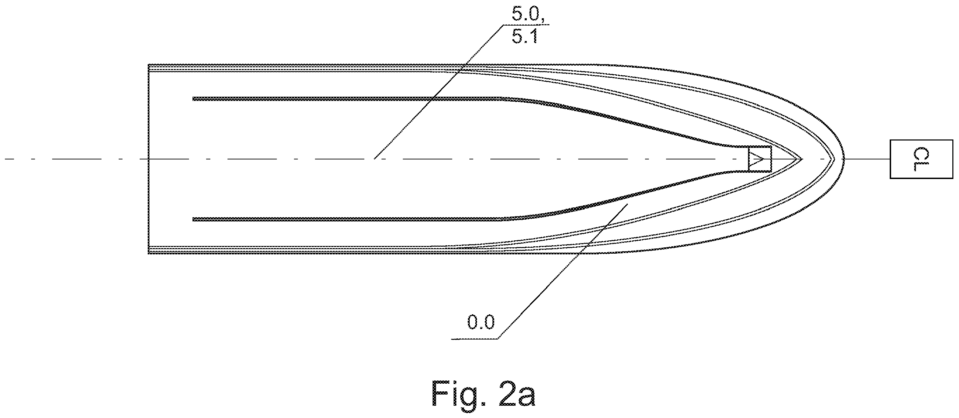

Figure 2a shows an embodiment of the profile of the bottom of an embodiment of the basically V-shaped hull 0.0 and where an embodiment of the recess in the basically V-shaped hull 0.0 is also shown, which in turn forms the air supported chamber 5.0 and where we see the air supported chamber ceiling 5.1. The figure also shows that the initially V-shaped hull 0.0 seen against the bottom in gray tones so that the contours of the hull come out more clearly.

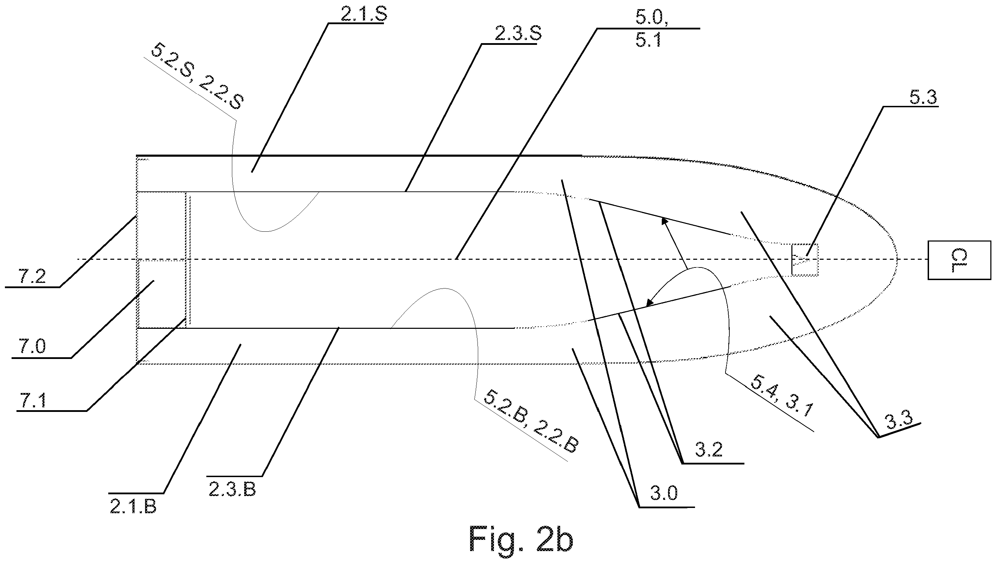

Figure 2b shows an embodiment of a sketch/drawing of the bottom of an embodiment of the basically V-shaped hull 0.0, where the basically V-shaped hull 0.0 is marked with lines and reference numbers to name the parts of the basically V-shaped hull 0.0. It appears from the Figure that the keel parts, respectively on the starboard and port side, 2.3.S, 2.3.B, extend from the transom 7.2 up to the V-shaped bow 3.0. At the transom 7.2 and between the starboard and port keel parts 2.3.S, 2.3.B there is a closing device 7.0 with a stern threshold 7.1. Furthermore, the Figure shows the air supported chamber 5.0 with the air supported chamber ceiling 5.1 and the air supported chamber side walls, respectively on the starboard and port side, 5.2.S, 5.2.B. It is further shown that the air supported chamber side walls 5.2.S, 5.2.B each comprise a longitudinal keel step, on the starboard and port side respectively, 2.2.S, 2.2.B, and where the edge from the air supported chamber side walls 5.2.S, 5.2.B over to the keel parts 2.1.S, 2.1.B are respectively starboard and port longitudinal keel rise threshold 2.3.S, 2.3.B. The figure further shows the front part of the bottom of the basically V-shaped hull 0.0 where there is an air intake 5.3, and that the V-shaped bow 3.0 also has the air supported chamber ceiling 5.1 and the air supported chamber side wall bow 5.4. It is further shown that the air supported chamber's side wall bow 5.4 comprises bow step 3.1 with a lower edge as defined as bow step 3.1. Incidentally, a center line CL is also shown, which divides the hull symmetrically into two parts, a starboard and a port part. The bow and stern are not defined as starboard and port.

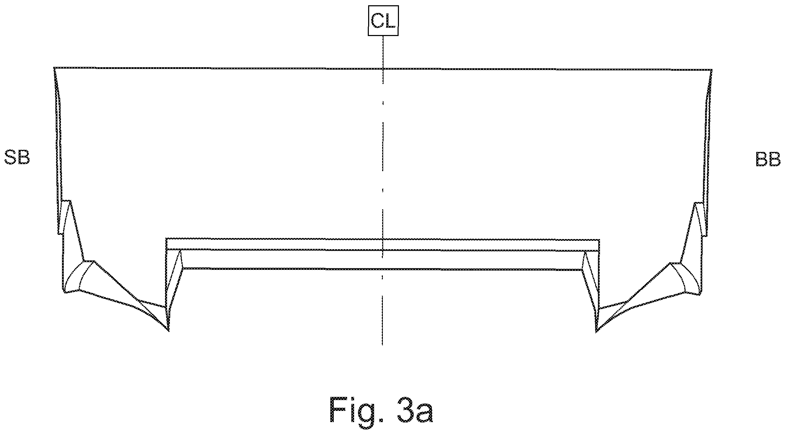

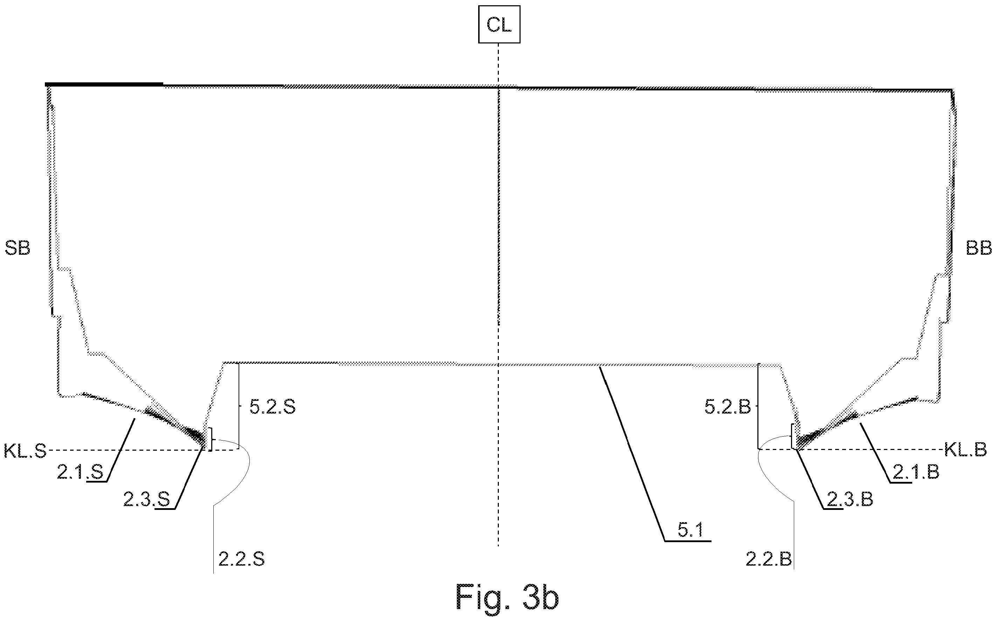

Figures 3a and 3b show an embodiment of the profile of a cross-section of the middle, a midships section, of the basically V-shaped hull 0.0 seen aft towards the transom 7.2. Figure 3a is in shades of gray which gives a better visual illustration of the curvature of the keel parts, respectively on the starboard side and port side, 2.1.S. 2.1.B, while Figure 3b is a profile view/sketch. The figures show the partly or completely outward sloping air supported chamber side walls 5.2.S, 5.2.B and how the lower part of the air supported chamber side walls 5.2.S, 5.2.B is a longitudinal vertical keel step, on the starboard and port side respectively, 2.2.S, 2.2.B. The figures also show the lower edge of the keel parts 2.1.S, 2.1.B which is also the keel line threshold, on the starboard and port side respectively, 2.3.S, 2.3.B and which is also in this figure the keel line, on the starboard and port side respectively, KL.S, KL.B.

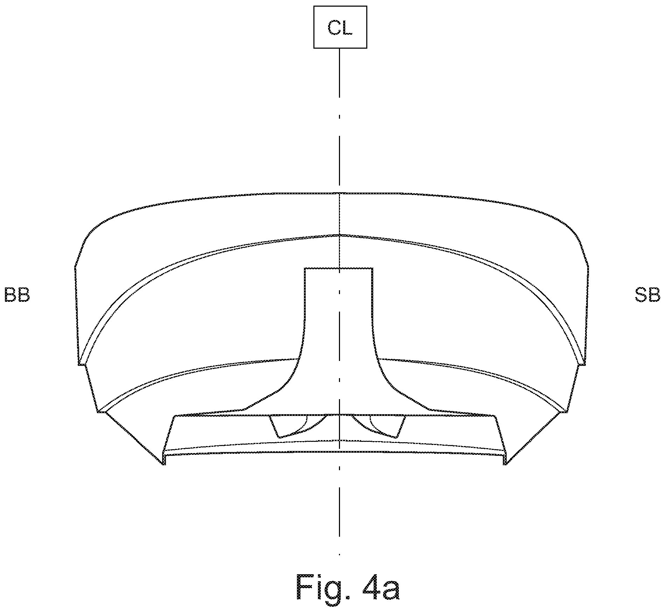

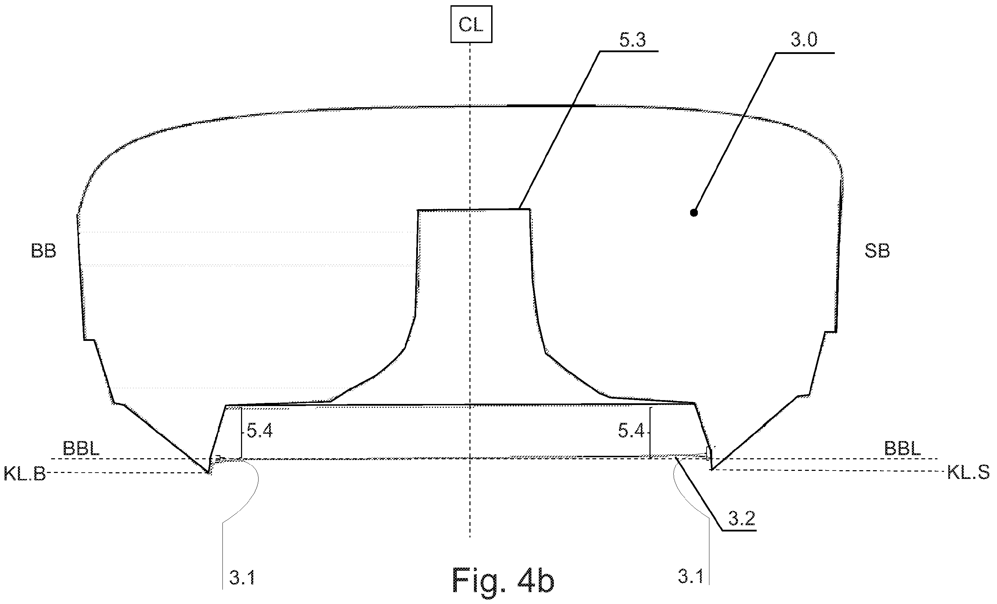

Figures 4a and 4b show the profile of a cross-section of the middle, a midships section, of the basically V-shaped hull 0.0 seen forward towards the V-shaped bow 3.0. Figure 4a is in shades of gray which gives a better visual illustration of the curvature of the V-shaped bow section 3.0, while Figure 4b is a profile view/sketch. The figures show the air intake 5.3 at the front and the partly or completely outwardly sloping air supported chamber side wall bow 5.4 and how the lower part of the air supported chamber side wall bow 5.4 is a bow step 3.1. The figures also show the lower edge of the air supported chamber's side wall bow 5.4 here as a bow base line BBL. Figure 4b also shows the difference in the draft between the starboard and port keel lines KL.B, KL.S and the bow base line BBL.

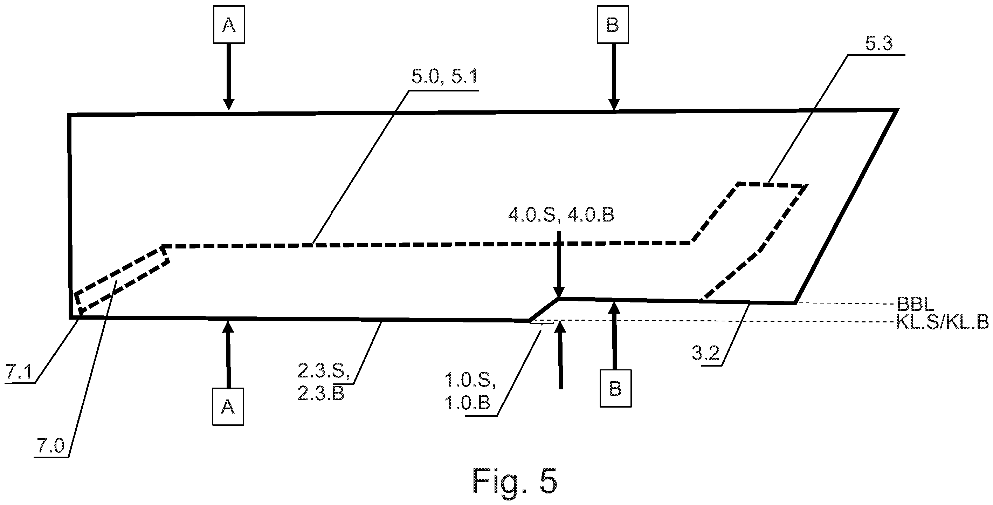

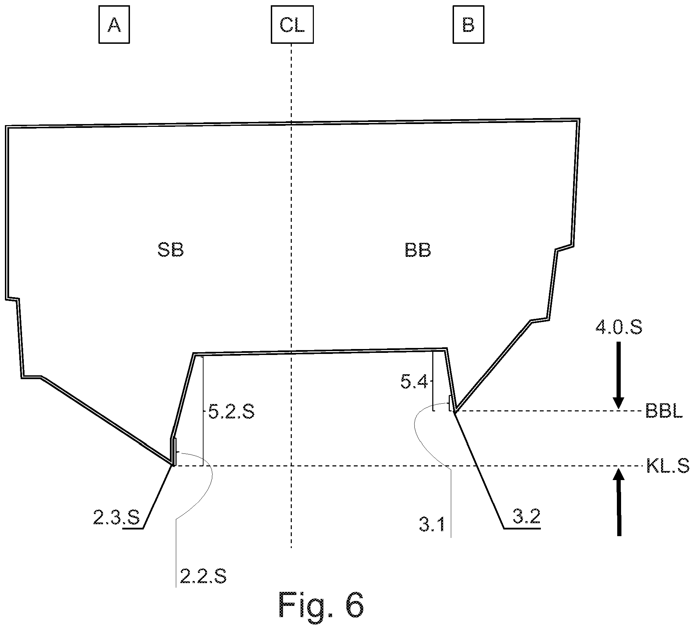

Figure 5 shows a sketch of a section at the longitudinal starboard, or port, keel sill 2.3.S, 2.3.B in an embodiment of the basically V-shaped hull 0.0. The figure shows the keel lines, respectively on the starboard and port side, KL.S/KL.B and the bow base line BBL, as well as the difference between the keel line, on the starboard and port side respectively, and the bow base line BBL, which is a transverse starboard keel step 4.0.S and a transverse port keel step 4.0.B. The figure shows here that the bow base line BBL follows the bow step 3.2, and that the keel lines, on the starboard and port side respectively, KL.S, KL.B follow the longitudinal keel step lines, on the starboard and port side respectively, right up to the decline in the discontinuous transition, on respectively starboard and port side, 1.0.S, 1.0.B. The figure further shows with a dashed line a recess area as the air supported chamber 5.0, and where the front part is the air supported chamber's air intake 5.3 and the aft part is delimited by a closing device 7.0 with an aft threshold 7.1. Two cross-sections are also marked with arrows, one aft with an A and one forward with a B. The cross-sections appear again in Figure 6.

Figure 6 shows two half cross-sections, one aft A and one forward B taken from Figure 5, of an embodiment of the basically V-shaped hull 0.0. The figure shows a composite cross-section of A and B about the center line CL, as the basically V-shaped hull 0.0 is symmetrical about the center line CL. Cross section A is an embodiment of the air supported chamber's starboard side wall 5.2.S, here slightly sloping outwards, and comprising the starboard longitudinal keel step 2.2.S, here vertical, and with a starboard longitudinal keel step threshold 2.3.S. Cross section B is an embodiment of the side wall of the air supported chamber bow 5.4, here very slightly sloping outwards, and comprising a bow step 3.1 with a bow step threshold 3.2. Furthermore, the Figure shows the starboard keel line KL.S, which here hits the starboard longitudinal keel step 2.3.S, and the bow base line BBL, which here hits the bow threshold 3.2, and the difference between them, also called transverse starboard keel step 4.0.S.

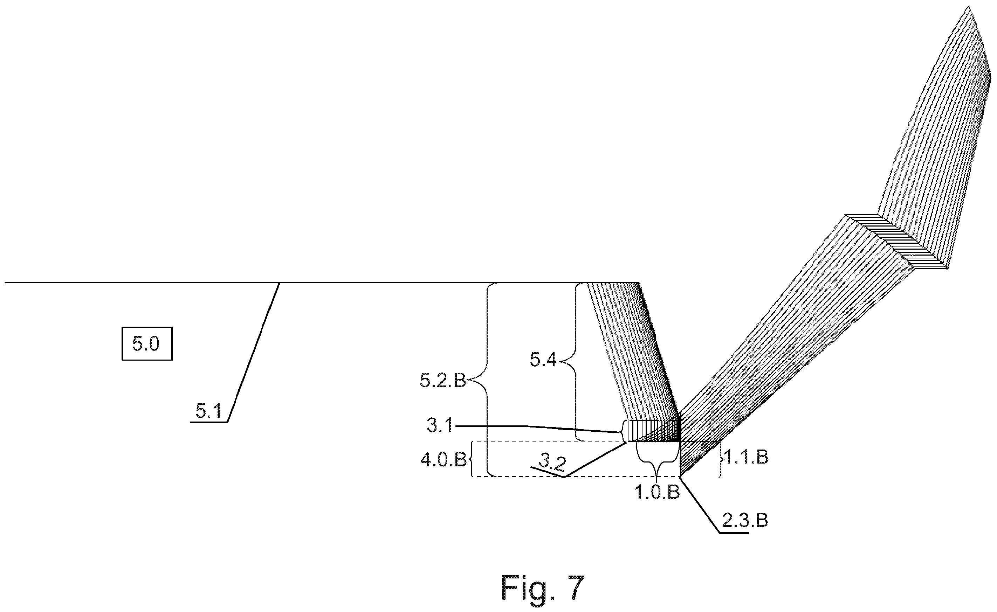

Figure 7 shows an embodiment of frame sections in a port discontinuous transition 1.0.B, also called the discontinuous transition area, seen obliquely from the bow towards the longitudinal port keel part 2.1.B. The figure shows the recess area for the air supported chamber 5 with air supported chamber ceiling 5.1 which extends to the air supported chamber's port side wall 5.2.B, here shown slightly sloping outwards. In the discontinuous transition 1.0.B as shown in Figure 7, there are both bow steps 3.1 and port longitudinal keel steps 2.2.B which are decreasing 1.1.B. The figure also shows how the frames in the discontinuous transition from the V-shaped bow to the port longitudinal keel part with a port transverse step 4.0.B. It is also apparent from the figure that the straight phasing of the longitudinal port keel part 2.2.B. The hull is symmetrical and has a corresponding starboard design.

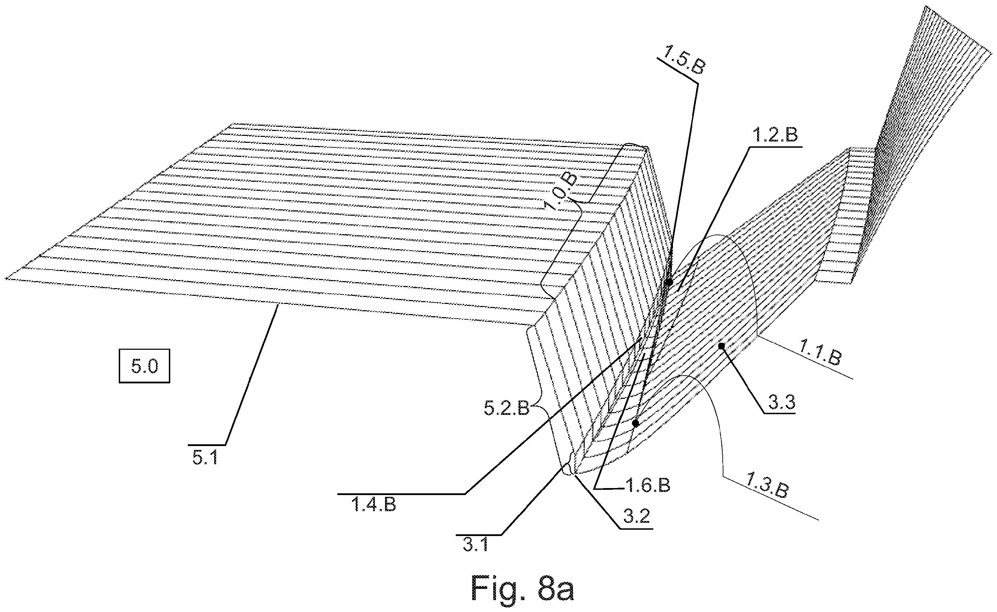

Figures 8a and 8b show an embodiment of frame sections in a port discontinuous transition 1.0.B, also called the discontinuous transition area, seen obliquely from above from the bow towards the port longitudinal keel part 2.1.B. The hull is symmetrical and has a corresponding starboard design. The figures show the recess area for the air supported chamber 5 with air supported chamber ceiling 5.1 which extends to the air supported chamber's port side wall 5.2.B, here shown slightly sloping outwards. Figure 8a shows forward port point 1.3.B, which is the forward termination of port discontinuous transition 1.0.B or termination point for port keel part, and aft port transition point 1.5.B, which is the aft termination of port discontinuous transition 1.0.B (the transition point). From the forward port point 1.3.B and to the aft port transition point 1.5.B, lies, among other things, as shown in Figures 8a and 8b:

- Decreasing port keel step 1.1.B
- outwardly sloping port keel surface 1.2.B
- Aft part of port bow step 1.4.B
- Backwards tapering port outphasing part 1.6.B

Figure 8b shows how these geometric surfaces of the decreasing port keel step 1.1.B, the outward sloping port keel surface 1.2.B, the aft part of the port bow step 1.4.B and the backward tapering port phasing part 1.6.B are fitted together with relatively sharp angles, which fit well together when making hulls in aluminium, steel or other weldable materials, but can also be cast in carbon, plastic or fiberglass. Such a design as shown in Figures 8a and 8b will also help to reinforce, stiffen, the hull in the discontinuous transition 1.0.B.

Figures 9a and 9b show an embodiment of frame sections in a port discontinuous transition 1.0.B, also called the discontinuous transition area, seen from the center line and directly towards the forward part of the port longitudinal keel part 2.1.B. The hull is symmetrical and has a corresponding starboard design. The figures show the port discontinuous transition 1.0.B from an aft port transition point 1.5.B to a forward port point 1.3.B and where you have a port longitudinal keel step 2.2.B on the frame at the aft port transition point 1.5.B and where you have a bow step 3.1 on the frame at the forward port point 1.3.B. In between these points, the forward port point 1.3.B and to the aft port transition point 1.5.B, there is a decreasing port keel step 1.1.B, which extends from the aft port transition point 1.5.B and straight forward and up outside its aft part of the port bow step 1.4.B and ends in the forward port point 1.3.B in the outer bow bearing surface 3.3. The figures also show how the aft part of the port bow step 1.4.B has a constant height/draft through the port discontinuous transition 1.0.B before it is joined with the port longitudinal keel step 2.2.B in the aft port transition point 1.5.B. The figures also show that the port keel line KL.B does not follow the port longitudinal keel step 2.2.B after the aft port transition point 1.5.B and that there is a vertical step up to the bow base line BBL from the port keel line KL.B.

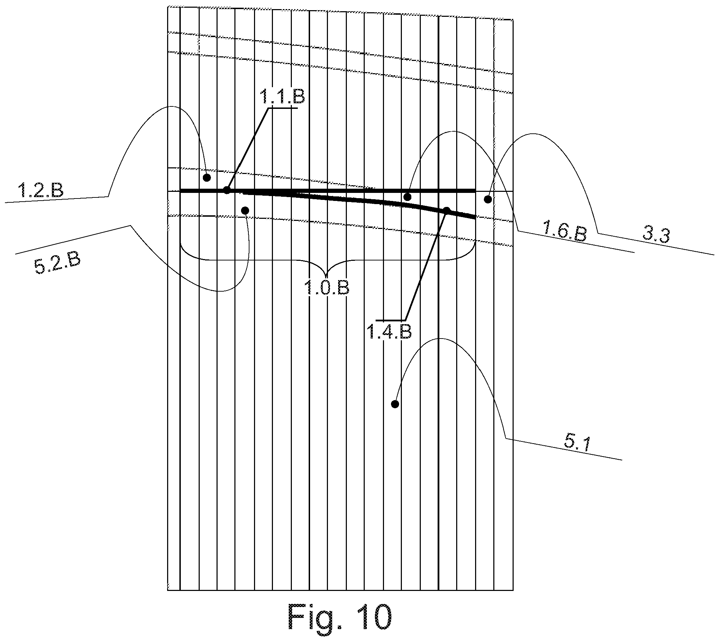

Figure 10 shows an embodiment of frame sections in a port discontinuous transition 1.0.B, also called the discontinuous transition area, seen from above straight down towards the forward part of the port longitudinal keel part 2.1. B. The figure shows the frames in the air supported chamber ceiling 5.1 which extend towards the air supported chamber's port side wall 5.2.B, which is slightly sloping outwards. The figure also shows the outwardly sloping port keel surface 1.2.B and the backwards tapering port phasing part 1.6.B, as these geometric parts have a horizontal design. The figure does not show the decreasing port keel step 1.1.B nor the aft part of the port bow step 1.4.B, as these geometric parts have a vertical design. The figure only shows the lines of the decreasing port keel step 1.1.B and the aft part of the port bow step 1.4.B, which are marked with thick black lines on the figure. It is clear from the Figure a straight decreasing port keel step 1.1.B until it joins the outer bow bearing surface 3.3 and how the aft part of the port bow step 1.4.B curves in and transitions to become bow step 3.1 in the V-shaped bow 3.0.

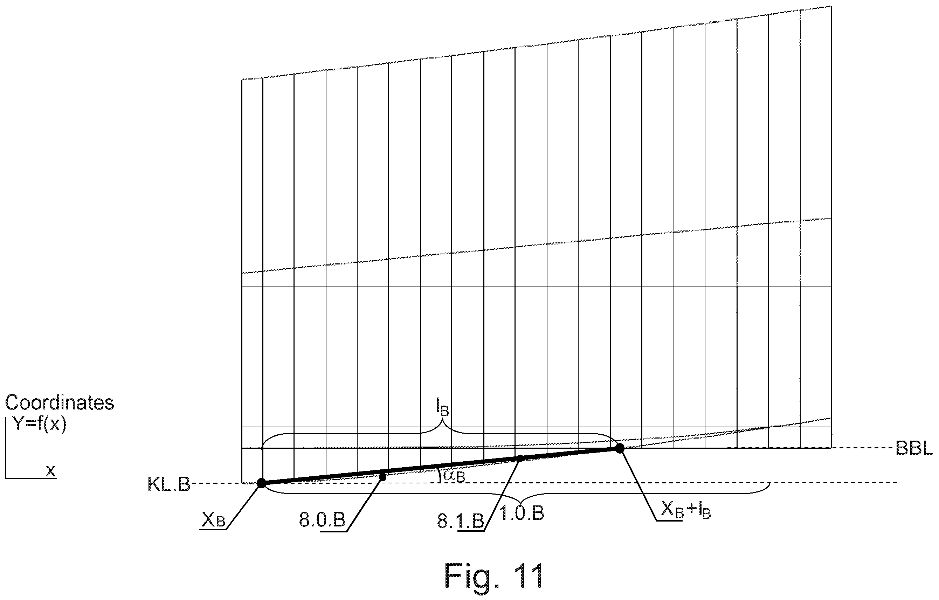

Figure 11 shows an embodiment of the frame sections in the discontinuous transition 1.0.B in a plan sketch, seen from the center line CL towards the port side, and where a port step profile line 8.0.B with a port step secant 8.1.B, which is marked with a highlighted line , extends from an aft step point xB and a forward step point $x_B + l_B$, where the aft point xB is defined as the point where the port step profile line coincides with the port keel line KL.B and where the forward point $x_B + l_B$ is defined as the point where the step profile line crosses the bow baseline BBL. The step profile line is defined as the hull line of the port keel step threshold on the decreasing port keel step 1.1.B between the points $x_B$ and $x_B + l_B$.

The figure shows a definition of xy-coordinates, where the y-axis is defined as a function of x and the x-axis is the longitudinal direction of the hull. The average growth rate (here: the rise) between xB and xB + IB can thus be expressed mathematically as:

$$\frac{\Delta y}{\Delta x} = \frac{f(x_B + l_B) - f(x_B)}{l_B}$$

The derivative of the function f(x), i.e. f'(x), can be expressed as IB goes towards zero, then the secant approaches the tangent, because (xB + IB, f(xB + IB)) gets closer and closer to (xB , f(xB)). The gradient of the tangent becomes the gradient of the secant when $l_B$ approaches zero:

$$\lim_{l_B \to 0} \frac{\Delta y}{\Delta x} = \frac{f(x_B + l_B) - f(x_B)}{l_B}$$

The figure shows that the port side riser edge 8.1.B forms a secant angle $\alpha$B, which is an acute angle with the port keel line KL.B, where the secant angle $\alpha$B shows the pitch of the port side riser edge 8.1.B between the points xB and xB + lB. The port sidestep profile line 8.0.B can be curved, curved or similar, and need not in itself have a constant pitch between a rear step point xB and a forward step point $x_B$ + lB. The port sidestep 8.1.B can therefore be used to define the relationship between the length and height of the port transverse step 4.0.B in the form of the secant angle $\alpha_B$.

Further explanation to Figure 11 for the discontinuous transition:

$x_B$: is defined as the point where the profile line coincides with the keel line.
$x_B + l_B$: is defined as the point where the profile line crosses the bow base line.
Profile line: the hull line here defined between points $x_B$ and $x_B$ + $l_B$.
$f(x_B)$: function of $x_B$ in the y direction.
$f(x_B + l_B)$: function of $x_B + l_B$ in the y direction.

The secant: a straight line which cuts through the profile line in at least two points and which here is delimited in the x direction by a length l, which is the distance between $x_B$ and $x_B$ + $l_B$.

The rise of the secant may be written as, and is the average growth rate between $x_B$ and $x_B$ + $l_B$:

$$\frac{\Delta y}{\Delta x} = \frac{f(x_B + l_B) - f(x_B)}{l_B}$$

The derivative of the function f(x), i.e. f'(x), can be expressed as l approaches zero, then the secant approaches the tangent, because $(x_B + l_B, f(x_B + l_B))$ gets closer and closer to (xB , f(xB)). The gradient of the tangent becomes the gradient of the secant as l approaches zero:

$$\lim_{l_B \to 0} \frac{\Delta y}{\Delta x} = \frac{f(x_B + l_B) - f(x_B)}{l_B}$$

Reference table:

| Reference | Name | Description |
|---|---|---|
| CL | Center line | Center line |
| KVL | Construction waterline | Waterline for a fully loaded vessel |
| SB | Starboard | Starboard |
| BB | Port side | Port side |
| KL.S | Starboard keel line | Line that substantially follows the starboard longitudinal keel step (2.3.S) forward until the port longitudinal keel threshold (2.2.S) decreases |
| KL.B | Port keel line | Line that mainly follows the port longitudinal keel threshold (2.3.B) forward until the port longitudinal keel threshold (2.2.B) decreases |
| BBL | bow baseline | Line that mainly follows the bow step (3.2) |
| 0.0 | V-shaped hull | Cf. Basically V-shaped hull |
| 1.0.S | Starboard discontinuous transition | Transition or transition area. |
| 1.0.B | Port discontinuous transition | Transition or transition area. |

(continued)

| Reference | Name | Description |
|---|---|---|
| 1.1.S | Decreasing starboard keel step | In the discontinuous starboard transition area (1.0.S) |
| 1.1.B | Decreasing port keel step | In the discontinuous port transition area (1.0.B) |
| 1.2.S | Outwardly sloping starboard keel surface | In the starboard discontinuous transition area (1.0.S) |
| 1.2.B | Outwardly sloping port keel surface | In the discontinuous port transition area (1.0.B) |
| 1.3.S | Foremost starboard point | The foremost termination of the starboard discontinuous |
| | | transition / termination point of the starboard keel |
| 1.3.B | Foremost port point | The foremost termination of the port discontinuous area / termination point of the port keel |
| 1.4.S | Aft part on starboard bow step | Bow step on starboard side in the discontinuous transition area |
| 1.4.B | Aft part of port bow step | Bow step on the port side in the discontinuous transition area |
| 1.5.S | Aft starboard transition point | The aft end of the starboard discontinuous transition (the transition point) |
| 1.5.B | Aft port transition point | The aft termination of the port discontinuous transition (transition point) |
| 1.6.S | Rearward tapering starboard phase-out section | Phase-out of the outer bow bearing surface (3.3) in the starboard discontinuous transition (1.0.S) |
| 1.6.B | Rearward tapering port phase-out section | Phase-out of the outer bow bearing surface (3.3) in the port discontinuous transition (1.0.B) |
| 2.0 | V-shaped keel part | |
| 2.1.S | Starboard keel part | |
| 2.1.B | Port keel part | |
| 2.2.S | Starboard longitudinal keel step | |
| 2.2.B | Port longitudinal keel step | |
| 2.3.S | Starboard longitudinal keel step threshold | |
| 2.3.B | Port longitudinal keel step threshold | |
| 3.0 | V-shaped bow section | |
| 3.1 | Bow step | Extends from starboard to port keel step |
| 3.2 | Bow step threshold | Bow step threshold is the transition from the bow step to the keel in the bow |
| 3.3 | Outer bow bearing surface | The surface (skin) of the hull outside the bow sill in the bow |
| 3.4 | V-shaped bow section in construction water line (CWL) | |
| 4.0.S | Transverse starboard keel step | The difference between starboard keel line (KL.S) and bow base line (BBL). |

(continued)

| Reference | Name | Description |
|---|---|---|
| 4.0.B | Transverse port keel step | The difference between port keel line (KL.B) and bow base line (BBL). |
| | | |
| 5.0 | Air supported chamber | The area on the underside of the hull intended to be filled with air. |
| 5.1 | Air supported chamber ceiling | |
| 5.2.S | Starboard side wall of the air supported chamber | |
| 5.2.B | Air supported chamber's port side wall | |
| 5.3 | Air supported chamber air intake | |
| 5.4 | Air supported chamber's sidewall bow | |
| 7.0 | Closing device | |
| 7.1 | Aft threshold | |
| 7.2 | Stern | |
| 8.0.S | Starboard step profile line | A hull line of the keel step threshold on the decreasing starboard keel step 1.1.S |
| | | between points x0 and x0 + I on the starboard side. |
| 8.0.B | Port step profile line | A hull line of the keel step threshold on the decreasing port keel step 1.1.B between points $x_b$ and $x_B + l_B$ on the starboard side. |
| 8.1.S | Starboard step secant | A straight line, like a secant, which cuts through the starboard profile line in at least two points, and which here is delimited in the x direction by a length Is, which is the distance between xs and $x_s + l_s$. |
| 8.1.B | Port sidestep secant | A straight line, like a secant, which cuts through the port profile line in at least two points, and which here is delimited in the x direction by a length IB, which is the distance between $x_s$ and $x_s + l_B$. |
| $x_s$ | Aft starboard step point | Is defined as the point where the starboard profile line 8.0.S runs into the starboard keel line KL.S. |
| $x_s + l_s$ | Forward starboard step point | Is defined as the point where the starboard profile line 8.0.S crosses the bow base line BBL. |
| $x_B$ | Aft port step point | Is defined as the point where the port profile line 8.0.B runs into the port keel line KL.B. |
| $x_B + l_B$ | Front port step point | Is defined as the point where the port profile line 8.0.B crosses the |
| | | bow base line BBL. |
| $l_S$ | Starboard step length. | A length between xS and xS+IS along an x-axis. |
| $l_B$ | Port step length | A length between $x_B$ and $x_B+l_B$ along an x-axis. |
| $\alpha_S$ | Starboard secant angle | Is defined as an acute angle between the starboard secant 8.1.S and the starboard keel line KL.S. |
| $\alpha_B$ | Port secant angle | Is defined as an acute angle between the port secant 8.1. B and the port keel line KL.B. |

**Claims**

1. An air supported vessel comprising the following features,

   - a V-shaped hull (0.0)
   - with a starboard keel part (2.1.S) and a port keel part (2.1.B), and
   - with a V-shaped bow (3.0), comprising an outer bow bearing surface (3.3),
   - where the V-shaped hull (0.0) has at least one air supported chamber (5.0) in a part of the V-shaped hull's (0.0) length below a waterline,
   - the at least one air supported chamber (5.0) is delimited by an air supported chamber ceiling (5.1), air supported chamber starboard and port side walls (5.2.S, 5.2.B) and with at least one aft closing device (7.0) with aft threshold (7.1) which forms an aft boundary of the at least one air supported chamber (5.0) and with at least one air support chamber air intake (5.3) which together with the side walls of the at least one air supported chamber in the bow (5.4) form a front boundary of the at least one air supported chamber (5.0),

     wherein the V-shaped bow (3.0) further comprises a bow step (3.1) with a bow step threshold (3.2), which extends from a starboard longitudinal keel step (2.2.S) around the V-shaped bow ( 3.0) to a port longitudinal keel step (2.2.B), and forms a lower boundary of the air supported chamber sidewalls in the bow (5.4), to reduce air leakage below a bow base line (BBL),
     **characterised by**

     - a transverse step at an aft part of the bow base line (BBL), comprising a starboard transverse step (4.0.S) and a port transverse step (4.0.B), where the starboard keel part (2.1.S ) with a starboard keel line (KL.S) and the port keel part (2.1.B) a the port keel line (KL.B) have greater draft than the V-shaped bow (3.0) with the bow base line (BBL) at the starboard transverse step (4.0.S) and the port transverse step (4.0.B).

2. The air supported vessel according to claim 1, wherein

   - the starboard keel part (2.1.S), comprises the starboard longitudinal keel step (2.2.S) and a starboard keel step threshold (2.3.S), which form a lower starboard lateral delimitation of the air support chamber's starboard side wall (5.2.S), to reduce air leakage under a starboard keel line (KL.S), and
   - the port keel part (2.1.B), comprises the port longitudinal keel step (2.2.B) and a port keel step threshold (2.3.B), which forms a lower port side boundary of the air supported chamber's port side wall (5.2.B), to reduce air leakage under a port keel line (KL.B).

3. The air supported vessel according to claim 1, wherein

   - a transition between the starboard longitudinal keel step (2.2.S) and the starboard aft part of the bow step (1.4.S) is a starboard discontinuous transition (1.0.S), and in which
   - a transition between the port longitudinal keel step (2.2.B) and the port aft part of the bow step (1.4.B) is a port discontinuous transition (1.0.B).

4. The air supported vessel according to claim 3, wherein the starboard discontinuous transition (1.0.S) extends from a forward starboard point (1.3.S) on the starboard keel where the starboard longitudinal keel step (2.2.S) runs into the outer bow bearing surface (3.3) on the starboard side on the outside of the bow step (3.1), and aft to an aft starboard transition point (1.5.S) on the starboard keel where the bow step (3.1) runs into the starboard longitudinal keel step (2.2.S), and
   in which the port discontinuous transition (1.0.B) extends from a forward port point (1.3.B) on the port keel where the port longitudinal keel step (2.2.B) runs into the outer bow bearing surface (3.3) on the port side on the outside of the bow step (3.1), and aft to an aft port transition point (1.5.B) on the port keel, where the bow step (3.1) on the port side runs into the port longitudinal keel step (2.2.B).

5. The air supported vessel according to claim 3, wherein the discontinuous transition, on the starboard and port side respectively (1.0.S, 1.0.B), forms a straight line forward and which extends up and converges in the outer bow bearing surface (3.3) on the starboard side respectively and port side of the V-shaped bow (3.0).

6. The air supported vessel according to claim 3 or 4, wherein the starboard discontinuous transition (1.0.S) comprises:

- a decreasing starboard keel step (1.1.S) in the forward direction, and
- an outward inclining starboard keel surface (1.2.S), and
- an aft part of the starboard bow step (1.4.S), and
- a backward tapering starboard outphasing part (1.6.S) of the outer bow bearing surface (3.3), on the starboard side, between the decreasing starboard keel step (1.1.S) and the aft part of the starboard bow step (1.4.S), and in which the port discontinuous transition (1.0.B) includes:

- a decreasing port keel step (1.1.B) in the forward direction, and
- an outward inclining port keel surface (1.2.B), and
- an aft part of the port bow step (1.4.B), and
- a backward tapering port outphasing part (1.6.B) of the outer bow bearing surface (3.3), on the port side, between the decreasing port keel step (1.1.B) and the aft part of the port bow step (1.4.B).

7. The air supported vessel according to claim 3, 4, 5 or 6, wherein the starboard discontinuous transition (1.0.S) comprises:

- that the transverse starboard step (4.0.S), which is the difference between a design draft at the aft starboard transition point (1.5.S) and a design draft at the forward starboard point (1.3.S), and in which the port discontinuous transition (1.0. B) includes:

- that the transverse port step (4.0.B) is the difference between a design draft at the aft port transition point (1.5.B) and a design draft at the forward port point (1.3.B).

8. The air supported vessel according to claim 1 or 2, wherein the V-shaped bow (3.0) has a bow base line (BBL) with a slight dip forward calculated from a transition between the bow step (3.1) and the starboard longitudinal keel step (2.2.S) or the port longitudinal keel step (2.2.B).

9. The air supported vessel according to claim 1 or 2, wherein the V-shaped bow (3.0) has a bow base line (BBL) which is substantially horizontal from a transition between the bow step (3.1) and respectively the starboard longitudinal keel step (2.2.S) or the port longitudinal keel step (2.2.B).

10. The air supported vessel according to claim 1, wherein the starboard keel part (2.1.S) is parallel, from the at least one aft closure device (7.0) forward to a forward starboard point (1.3.S), with the V-shaped hull's (0.0) center line (CL) and in which the port keel part (2.1.B) is parallel, from the at least one aft closing device (7.0) forward to a port forward point (1.3.B), with the V- shaped hull's (0.0) center line (CL).

11. The air supported vessel according to claim 1, wherein the aft threshold (7.1) has an adjustable draft.

12. The air supported vessel according to claim 1, wherein the air supported chamber side walls, respectively on the starboard and port side, (5.2.S, 5.2.B), are entirely or partially, outwardly inclined.

13. The air supported vessel according to claim 1, wherein the longitudinal keel steps, on the starboard and port side respectively (2.2.S, 2.2.B), are substantially vertical steps.

14. The air supported vessel according to claim 2, wherein the bow step (3.1) is a vertical step.

15. The air supported vessel according to claim 1, wherein the V-shaped bow (3.0), comprising a bow step (3.1), which extends aft to the aft starboard, and respectively the aft port, transition point (1.5.S, 1.5.B) located near the center (0.5 x CWL) of a construction water line (CWL).

**Patentansprüche**

1. Luftkissenfahrzeug, umfassend die folgenden Merkmale,

- einen V-förmigen Rumpf (0,0)
- mit einem steuerbordseitigen Kielteil (2.1.S) und einem backbordseitigen Kielteil (2.1.B), und
- mit einem V-förmigen Bug (3.0), umfassend eine äußere Bugträgerfläche (3.3),

- wobei der V-förmige Rumpf (0.0) mindestens eine Luftkissenkammer (5.0) in einem Teil der Länge des V-förmigen Rumpfs (0.0) unterhalb einer Wasserlinie aufweist,
- die mindestens eine Luftkissenkammer (5.0) durch eine Luftkissenkammerdecke (5.1), eine steuerbordseitige und backbordseitige Luftkissenkammerseitenwände (5.2.S, 5.2.B) und mit mindestens einer hinteren Verschlussvorrichtung (7.0) mit einer hinteren Schwelle (7.1), die eine hintere Begrenzung der mindestens einen Luftkissenkammer (5.0) bildet, und mit mindestens einem Luftkissenkammerlufteinlass (5.3), die zusammen mit den Seitenwänden der mindestens einen Luftkissenkammer in dem Bug (5.4) eine vordere Begrenzung der mindestens einen Luftkissenkammer (5.0) bilden, begrenzt ist, wobei der V-förmige Bug (3.0) ferner eine Bugstufe (3.1) mit einer Bugstufenschwelle (3.2) umfasst, die sich von einer steuerbordseitigen Längskielstufe (2.2.S) um den V-förmigen Bug (3.0) zu einer backbordseitigen Längskielstufe (2.2.B) erstreckt und eine untere Begrenzung der Luftkissenkammerseitenwände in dem Bug (5.4) bildet, um Luftleckage unter einer Bugbasislinie (BBl) zu reduzieren, **gekennzeichnet durch**
- eine Querstufe an einem hinteren Teil der Bugbasislinie (BBL), umfassend eine steuerbordseitige Querstufe (4.0.S) und eine backbordseitige Querstufe (4.0.B), wobei der steuerbordseitige Kielteil (2.1.S) mit einer steuerbordseitigen Kiellinie (KL.S) und der backbordseitige Kielteil (2.1.B) an der backbordseitigen Kiellinie (KL.B) einen größeren Tiefgang aufweisen als der V-förmige Bug (3.0) mit der Bugbasislinie (BBL) an der steuerbordseitigen Querstufe (4.0.S) und der backbordseitigen Querstufe (4.0.B).

2. Luftkissenfahrzeug nach Anspruch 1, wobei

- der steuerbordseitige Kielteil (2.1.S) die steuerbordseitige Längskielstufe (2.2.S) und eine steuerbordseitige Kielstufenschwelle (2.3.S) umfasst, die eine untere steuerbordseitige seitliche Begrenzung der steuerbordseitigen Seitenwand (5.2.S) der Luftkissenkammer bilden, um Luftleckagen unter einer steuerbordseitigen Kiellinie (KL.S) zu reduzieren, und
- der backbordseitige Kielteil (2.1.B) die backbordseitige Längskielstufe (2.2.B) und eine backbordseitige Kielstufenschwelle (2.3.B) umfasst, die eine untere backbordseitige Seitenbegrenzung der backbordseitige Seitenwand der Luftkissenkammer (5.2.B) bildet, um Luftleckage unter einer backbordseitigen Kielleitung (KL.B) zu reduzieren.

3. Luftkissenfahrzeug nach Anspruch 1, wobei

- ein Übergang zwischen der steuerbordseitigen Längskielstufe (2.2.S) und dem steuerbordseitigen hinteren Teil der Bugstufe (1.4.S) ein steuerbordseitiger diskontinuierlicher Übergang (1.0.S) ist, und wobei
- ein Übergang zwischen der backbordseitigen Längskielstufe (2.2.B) und dem backbordseitigen hinteren Teil der Bugstufe (1.4.B) ein unterbrochener backbordseitiger Übergang (1.0.B) ist.

4. Luftkissenfahrzeug nach Anspruch 3, wobei sich der steuerbordseitige diskontinuierliche Übergang (1.0.S) von einem vorderen steuerbordseitigen Punkt (1.3.S) an dem steuerbordseitigen Kiel, wo die steuerbordseitige Längskielstufe (2.2.S) in die äußere Bugträgerfläche (3.3) auf der Steuerbordseite an der Außenseite der Bugträgerfläche (3.1) verläuft, und nach hinten zu einem hinteren steuerbordseitigen Übergangspunkt (1.5.S) an dem steuerbordseitigen Kiel erstreckt, wo die Bugstufe (3.1) in die steuerbordseitige Längskielstufe (2.2.S) verläuft, und wobei sich der backbordseitige diskontinuierliche Übergang (1.0.B) von einem vorderen backbordseitigen Punkt (1.3.B) an dem backbordseitigen Kiel, wo die backbordseitige Längskielstufe (2.2.B) in die äußere Bugträgerfläche (3.3) auf der Backbordseite an der Außenseite der Bugträgerfläche (3.1) verläuft, und nach hinten zu einem hinteren backbordseitigen Übergangspunkt (1.5.B) an dem backbordseitigen Kiel erstreckt, wo die Bugstufe (3.1) auf der Backbordseite in die backbordseitige Längskielstufe (2.2.B) verläuft.

5. Luftkissenfahrzeug nach Anspruch 3, wobei der diskontinuierliche Übergang auf der Steuerbordseite bzw. Backbordseite (1.0.S, 1.0.B) eine gerade Linie nach vorne bildet und sich nach oben erstreckt und in der äußeren Bugträgerfläche (3.3) auf der Steuerbordseite bzw. Backbordseite des V-förmigen Bugs (3.0) konvergiert.

6. Luftkissenfahrzeug nach Anspruch 3 oder 4, wobei der steuerbordseitige diskontinuierliche Übergang (1.0.S) Folgendes umfasst:

- eine abnehmende steuerbordseitige Kielstufe (1.1.S) in Vorwärtsrichtung und
- eine nach außen geneigte steuerbordseitige Kielfläche (1.2.S) und
- einen hinteren Teil der steuerbordseitigen Bugstufe (1.4.S) und
- einen sich nach hinten verjüngenden steuerbordseitigen Teil (1.6.S) der äußeren Bugträgerfläche (3.3) auf der Steuerbordseite zwischen der abnehmenden steuerbordseitigen Kielstufe (1.1.S) und dem hinteren Teil der steuerbordseitigen Bugstufe (1.4.S), und wobei der backbordseitige diskontinuierliche Übergang (1.0.B) Folgendes beinhaltet:

- eine abnehmende backbordseitige Kielstufe (1.1.B) in Vorwärtsrichtung und
- eine nach außen geneigte backbordseitige Kielfläche (1.2.B) und
- einen hinteren Teil der backbordseitigen Bugstufe (1.4.B) und
- einen sich nach hinten verjüngenden Teil (1.6.B) der äußeren Bugträgerfläche (3.3) auf der Backbordseite zwischen der abnehmenden backbordseitigen Kielstufe (1.1.B) und dem hinteren Teil der backbordseitigen Bugstufe (1.4.B).

7. Luftkissenfahrzeug nach Anspruch 3, 4, 5 oder 6, wobei der steuerbordseitige diskontinuierliche Übergang (1.0.S) Folgendes umfasst:

- dass die steuerbordseitige Querstufe (4.0.S), die die Differenz zwischen einem Konstruktionsentwurf an dem hinteren steuerbordseitigen Übergangspunkt (1.5.S) und einem Konstruktionsentwurf an dem vorderen steuerbordseitigen Punkt (1.3.S) ist, und wobei der steuerbordseitige diskontinuierliche Übergang (1.0.B) Folgendes beinhaltet:

- dass die backbordseitige Querstufe (4.0.B) die Differenz zwischen einem Konstruktionsentwurf an dem hinteren backbordseitigen Übergangspunkt (1.5.B) und einem Konstruktionsentwurf an dem vorderen backbordseitigen Punkt (1.3.B) ist.

8. Luftkissenfahrzeug nach Anspruch 1 oder 2, wobei der V-förmige Bug (3.0) eine Bugbasislinie (BBL) mit einem leichten Abfall nach vorne aufweist, der anhand eines Übergangs zwischen der Bugstufe (3.1) und der steuerbordseitigen Längskielstufe (2.2.S) oder der backbordseitigen Längskielstufe (2.2.B) berechnet wird.

9. Luftkissenfahrzeug nach Anspruch 1 oder 2, wobei der V-förmige Bug (3.0) eine Bugbasislinie (BBl) aufweist, die im Wesentlichen horizontal von einem Übergang zwischen der Bugstufe (3.1) und jeweils der steuerbordseitigen Längskielstufe (2.2.S) oder der backbordseitigen Längskielstufe (2.2.B) ist.

10. Luftkissenfahrzeug nach Anspruch 1, wobei der steuerbordseitige Kielteil (2.1.S) parallel von der mindestens einen hinteren Verschlussvorrichtung (7.0) vorwärts zu einem vorderen steuerbordseitigen Punkt (1.3.S) mit der Mittellinie (CL) des V-förmigen Rumpfs (0.0) ist und wobei der backbordseitige Kielteil (2.1.B) parallel von der mindestens einen hinteren Verschlussvorrichtung (7.0) vorwärts zu einem backbordseitigen Vorwärtspunkt (1.3.B) mit der Mittellinie (CL) des V-förmigen Rumpfs (0.0) ist.

11. Luftkissenfahrzeug nach Anspruch 1, wobei die hintere Schwelle (7.1) einen einstellbaren Tiefgang aufweist.

12. Luftkissenfahrzeug nach Anspruch 1, wobei die Luftkissenkammerseitenwände jeweils auf der Steuerbordseite und Backbordseite (5.2.S, 5.2.B) ganz oder teilweise nach außen geneigt sind.

13. Luftkissenfahrzeug nach Anspruch 1, wobei die Längskielstufen auf der Steuerbordseite bzw. Backbordseite (2.2.S, 2.2.B) im Wesentlichen vertikale Stufen sind.

14. Luftkissenfahrzeug nach Anspruch 2, wobei die Bugstufe (3.1) eine vertikale Stufe ist.

15. Luftkissenfahrzeug nach Anspruch 1, wobei der V-förmige Bug (3.0) eine Bugstufe (3.1) umfasst, die sich hinter dem hinteren steuerbordseitigen bzw. dem hinteren backbordseitigen Übergangspunkt (1.5.S, 1.5.B) erstreckt, der sich in der Nähe des Zentrums (0.5 x CWL) einer Bauwasserleitung (CWL) befindet.

**Revendications**

1. Navire sur coussin d'air comprenant les caractéristiques suivantes,

- une coque en V (0.0)
- avec une partie de quille tribord (2.1.S) et une partie de quille bâbord (2.1.B), et

- avec une étrave en V (3.0), comprenant une surface extérieure de relèvement d'étrave (3.3),
- dans lequel la coque en V (0.0) présente au moins une chambre gonflable (5.0) dans une partie de la longueur de la coque en V (0.0) au-dessous d'une ligne de flottaison,
- l'au moins une chambre gonflable (5.0) est délimitée par un plafond (5.1) de chambre gonflable, des parois latérales tribord et bâbord (5.2.S, 5.2.B) de chambre gonflable et avec au moins un dispositif de fermeture arrière (7.0) avec un seuil arrière (7.1) qui forme une limite arrière de l'au moins une chambre gonflable (5.0) et avec au moins une entrée d'air (5.3) de chambre gonflable qui, avec les parois latérales de l'au moins une chambre gonflable dans l'étrave (5.4), forment une limite avant de l'au moins une chambre gonflable (5.0),

dans lequel l'étrave en V (3.0) comprend en outre une inclinaison d'étrave (3.1) avec un seuil d'inclinaison d'étrave (3.2), qui s'étend d'une inclinaison de quille longitudinale tribord (2.2.S) autour de l'étrave en V (3.0) à une inclinaison de quille longitudinale bâbord (2.2.B), et forme une limite inférieure des parois latérales de la chambre gonflable dans l'étrave (5.4), pour réduire les fuites d'air au-dessous d'une ligne de base d'étrave (BBL),

**caractérisé par**

- une inclinaison transversale au niveau d'une partie arrière de la ligne de base d'étrave (BBL), comprenant une inclinaison transversale tribord (4.0.S) et une inclinaison transversale bâbord (4.0.B), dans lequel la partie de quille tribord (2.1.S) avec une ligne de quille tribord (KL.S) et la partie de quille bâbord (2.1.B) avec la ligne de quille bâbord (KL.B) présentent un plus grand tirant d'eau que l'étrave en V (3.0) avec la ligne de base d'étrave (BBL) au niveau de l'inclinaison transversale tribord (4.0.S) et de l'inclinaison transversale bâbord (4.0.B).

2. Navire sur coussin d'air selon la revendication 1, dans lequel

- la partie de quille tribord (2.1.S), comprend l'inclinaison de quille longitudinale tribord (2.2.S) et un seuil d'inclinaison de quille tribord (2.3.S), qui forment une délimitation latérale tribord inférieure de la paroi latérale tribord (5.2.S) de la chambre gonflable, pour réduire les fuites d'air sous une ligne de quille tribord (KL.S), et
- la partie de quille bâbord (2.1.B) comprend l'inclinaison de quille longitudinale bâbord (2.2.B) et un seuil d'inclinaison de quille bâbord (2.3.B), qui forme une limite inférieure côté bâbord de la paroi latérale bâbord (5.2.B) de la chambre gonflable, pour réduire les fuites d'air sous une ligne de quille bâbord (KL.B).

3. Navire sur coussin d'air selon la revendication 1, dans lequel

- une transition entre l'inclinaison de quille longitudinale tribord (2.2.S) et la partie arrière tribord de l'inclinaison d'étrave (1.4.S) est une transition discontinue tribord (1.0.S), et dans lequel
- une transition entre l'inclinaison de quille longitudinale bâbord (2.2.B) et la partie arrière bâbord de l'inclinaison d'étrave (1.4.B) est une transition discontinue bâbord (1.0.B).

4. Navire sur coussin d'air selon la revendication 3, dans lequel la transition discontinue tribord (1.0.S) s'étend à partir d'un point tribord avant (1.3.S) sur la quille tribord où l'inclinaison de quille longitudinale tribord (2.2.S) se prolonge dans la surface extérieure de relèvement d'étrave (3.3) sur le côté tribord à l'extérieur de l'inclinaison d'étrave (3.1), et à l'arrière vers un point de transition tribord arrière (1.5.5) sur la quille tribord où l'inclinaison d'étrave (3.1) se prolonge dans l'inclinaison de quille longitudinale tribord (2.2.S), et dans lequel la transition discontinue bâbord (1.0.B) s'étend à partir d'un point bâbord avant (1.3.B) sur la quille bâbord où l'inclinaison de quille longitudinale bâbord (2.2.B) se prolonge dans la surface extérieure de relèvement d'étrave (3.3) sur le côté bâbord à l'extérieur de l'inclinaison d'étrave (3.1), et à l'arrière vers un point de transition bâbord arrière (1.5.B) sur la quille bâbord, dans lequel l'inclinaison d'étrave (3.1) sur le côté bâbord se prolonge dans l'inclinaison de quille longitudinale bâbord (2.2.B).

5. Navire sur coussin d'air selon la revendication 3, dans lequel la transition discontinue, sur les côtés tribord et bâbord respectivement (1.0.S, 1.0.B), forme une ligne droite vers l'avant et qui s'étend vers le haut et converge dans la surface extérieure de relèvement d'étrave (3.3) sur le côté tribord respectivement et le côté bâbord de l'étrave en V (3.0).

6. Navire sur coussin d'air selon la revendication 3 ou 4, dans lequel la transition discontinue tribord (1.0.S) comprend :

- une inclinaison de quille tribord décroissante (1.1.5) dans la direction avant, et
- une surface de quille tribord inclinée vers l'extérieur (1.2.S), et
- une partie arrière de l'inclinaison d'étrave tribord (1.4.S), et

- une partie à déphasage tribord effilée vers l'arrière (1.6.S) de la surface de relèvement d'étrave extérieure (3.3), côté tribord, entre l'inclinaison de quille tribord décroissante (1.1.S) et la partie arrière de l'inclinaison d'étrave tribord (1.4.S), et dans laquelle la transition discontinue bâbord (1.0.B) inclut :

> - une inclinaison de quille bâbord décroissante (1.1.B) dans la direction avant, et
> - une surface de quille bâbord inclinée vers l'extérieur (1.2.B), et
> - une partie arrière de l'inclinaison d'étrave bâbord (1.4.B), et
> - une partie à déphasage bâbord effilée vers l'arrière (1.6.B) de la surface extérieure de relèvement d'étrave (3.3), côté bâbord, entre l'inclinaison de quille bâbord décroissante (1.1.B) et la partie arrière de l'inclinaison d'étrave bâbord (1.4.B).

7. Navire sur coussin d'air selon la revendication 3, 4, 5 ou 6, dans lequel la transition discontinue tribord (1.0.S) comprend :

> - que l'inclinaison tribord transversale (4.0.S), qui est la différence entre un tirant d'eau de conception au point de transition tribord arrière (1.5.5) et un tirant d'eau de conception au point tribord avant (1.3.S), et dans laquelle la transition discontinue bâbord (1.0.B) inclut :
>
> > - que l'inclinaison bâbord transversale (4.0.B) est la différence entre un tirant d'eau de conception au point de transition bâbord arrière (1.5.B) et un tirant d'eau de conception au point bâbord avant (1.3.B).

8. Navire sur coussin d'air selon la revendication 1 ou 2, dans lequel l'étrave en V (3.0) présente une ligne de base d'étrave (BBL) avec une légère pente vers l'avant calculée à partir d'une transition entre l'inclinaison d'étrave (3.1) et l'inclinaison de quille longitudinale tribord (2.2.S) ou l'inclinaison de quille longitudinale bâbord (2.2.B).

9. Navire sur coussin d'air selon la revendication 1 ou 2, dans lequel l'étrave en V (3.0) présente une ligne de base d'étrave (BBL) qui est sensiblement horizontale à partir d'une transition entre l'inclinaison d'étrave (3.1) et respectivement l'inclinaison de quille longitudinale tribord (2.2.S) ou l'inclinaison de quille longitudinale bâbord (2.2.B).

10. Navire sur coussin d'air selon la revendication 1, dans lequel la partie de quille tribord (2.1.S) est parallèle, de l'au moins un dispositif de fermeture arrière (7.0) vers l'avant à un point tribord avant (1.3.S), à l'axe central (CL) de la coque en V (0.0) et dans lequel la partie de quille bâbord (2.1.B) est parallèle, de l'au moins un dispositif de fermeture arrière (7.0) vers l'avant à un point avant bâbord (1.3.B), à l'axe central (CL) de la coque en V (0.0).

11. Navire sur coussin d'air selon la revendication 1, dans lequel le seuil arrière (7.1) présente un tirant d'eau réglable.

12. Navire sur coussin d'air selon la revendication 1, dans lequel les parois latérales de la chambre gonflable, respectivement sur les côtés tribord et bâbord (5.2.S, 5.2.B), sont entièrement ou partiellement inclinées vers l'extérieur.

13. Navire sur coussin d'air selon la revendication 1, dans lequel les inclinaisons de quille longitudinales, sur les côtés tribord et bâbord respectivement (2.2.S, 2.2.B), sont des inclinaisons sensiblement verticales.

14. Navire sur coussin d'air selon la revendication 2, dans lequel l'inclinaison d'étrave (3.1) est une inclinaison verticale.

15. Navire sur coussin d'air selon la revendication 1, dans lequel l'étrave en V (3.0), comprenant une inclinaison d'étrave (3.1), qui s'étend vers l'arrière en direction du point de transition tribord arrière et bâbord arrière (1.5.S, 1.5.B) respectivement, situé près du centre (0,5 x CWL) d'une ligne d'eau de construction (CWL).

Fig. 0

Fig. 1a

Fig. 1b

CL

5.0,
5.1

0.0

Fig. 2a

Fig. 2b

EP 4 493 454 B1

CL

SB

BB

Fig. 3a

Fig. 3b

Fig. 4a

Fig. 4b

Fig. 5

Fig. 6

EP 4 493 454 B1

Fig. 7

Fig. 8a

Fig. 8b

Fig. 9a

Fig. 9b

Fig. 10

Fig. 11

EP 4 493 454 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3742888 A
- US 3267898 A
- US 3476069 A
- GB 2009677 A
- US 6293216 B
- CN 201761628 U
- US 5415120 A